# EUROPEAN PATENT APPLICATION

(11) **EP 1 916 592 A2**
(43) Date of publication of application: **30.04.2008**
(21) Application number: 07118796.7
(22) Date of filing: 18.10.2007
(51) Int. Cl.: G06F 3/01

(54) **Haptic feedback apparatus and method**

(30) Priority: 23.10.2006 JP 2006288042; 13.04.2007 JP 2007106367
(71) Applicant: Canon Kabushiki Kaisha, Ohta-Ku, Tokyo 146-8501 (JP)
(72) Inventor: Nogami, Atsushi, c/o Canon Kabushiki Kaisha, Tokyo Tokyo 146-8501 (JP); Nishimura Naoki, c/o Canon Kabushiki Kaisha, Tokyo Tokyo 146-8501 (JP); Tokita, Toshinobu c/o Canon Kabushiki Kaisha, Tokyo Tokyo 146-8501 (JP); Sonoda, Tetsuri, c/o Canon Kabushiki Kaisha, Tokyo Tokyo 146-8501 (JP)
(74) Representative: TBK-Patent

(57) **Abstract**

A plurality of stimulus generators (110), which are used to apply stimuli to the human body, and are laid on the human body of the user, are controlled. A position determination unit (108) determines whether or not a virtual object which forms a virtual space where the user exists is in contact with the human body.
When the contact has occurred, a control unit (103) executes drive control of each of a plurality of stimulus generators (110), which are located near a place where the contact is determined, based on the positional relationship between the virtual object and the stimulus generators.

## Description

### BACKGROUND OF THE INVENTION

### Field of the Invention

The present invention relates to a technique for applying a stimulus to a human body based on a contact between the human body and a virtual object.

### Description of the Related Art

In the field of virtual reality, a haptic display that allows the user to touch and manipulate a virtual object has been examined. The haptic display is roughly classified into a force feedback display that feeds back a reactive force from an object to a human body, and a tactile display which feeds back hand feeling of an object. Most of the conventional force feedback displays have a large size and poor portability, and tend to be expensive due to complicated arrangements. The tactile displays also tend to have complicated arrangements, and cannot provide sufficient hand feeling based on the existing technique.

Hence, in place of feeding back a sufficient reactive force from a virtual object or accurate hand feeling of the object surface, a contact feedback apparatus which simply feeds back whether or not to contact a virtual object has been examined. With this technique, a plurality of vibration motors are attached to a human body, and, a vibration motor at an appropriate position is controlled to vibrate when the user contacts a virtual object, thus making the user perceive a contact with the virtual object. The user can perceive a part of his or her body that contacts the virtual object by vibrations of the vibration motor. Since the vibration motors are compact, inexpensive, and lightweight, they can be relatively easily attached to the whole human body, and are particularly effective for interactions with virtual objects in a virtual reality system with a high degree of freedom in mobility.

The following contact feedback apparatuses using vibration motors are known.

PCT(WO) No. 2000-501033 discloses a technique that makes the user perceive a contact between the fingertip and a virtual object by setting vibration motors on a data glove used to acquire the fingertip position, and applying vibrations to the fingertip.

Also, Hiroaki Yano, Tetsuro Ogi, and Michitaka Hirose: "Development of Haptic Suit for whole human body using vibrators", TVRSJ Vol. 3, No. 3, 1998 discloses an apparatus which attaches a total of 12 vibration motors to the whole human body, and makes the user recognize a virtual wall by vibrating the vibration motors upon contact with the virtual wall. With this reference, the vibration motor attachment positions are judged based on a human body sensory chart, and the vibration motors are attached to the head, the backs of hands, elbows, waistline (three motors), knees, and ankles.

Jonghyun Ryu and Gerard Jounghyun Kim: "Using a Vibro-tactile Display for Enhanced Collision Perception and Presence", VRST'04, November 10 - 12, 2004, Hong Kong discloses a technique about contacts with objects of different textures by attaching vibration motors to four positions on the arms and four positions on the legs, and changing the vibrations of the vibration motors.

R.W. Lindeman, Y. Yanagida, H. Noma, K. Hosaka, and K. Kuwabara: "Towards Full-Body Haptic Feedback: The Design and Deployment of a Spatialized Vibrotactile Feedback System", VRST'04, November 10 - 12, 2004, Hong Kong discloses an apparatus which attaches vibration motors to a human body for a combat field simulator. This technique is characterized in that the vibration motors are controlled wirelessly.

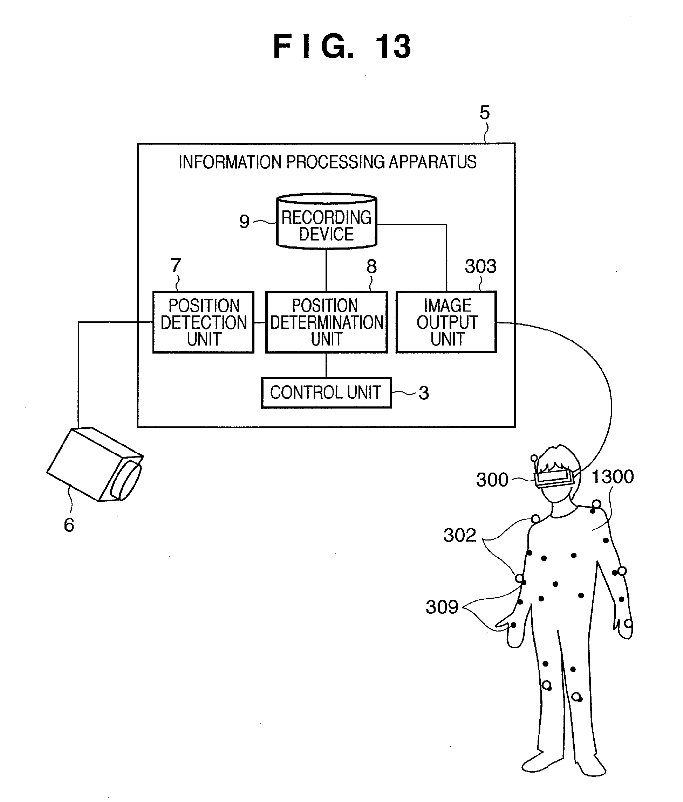

Fig. 13 is a block diagram showing the functional arrangement of a conventional contact feedback apparatus using vibration motors. In Fig. 13, a plurality of vibration motors 309 are attached to a human body 1300 of the user. The user wears a head-mounted display (HMD) 300 to observe a virtual object. In order to detect a contact with the virtual object, since the position information of the human body is required, markers 302 used for detecting position are attached to respective parts of the human body, and a camera 6 used to capture an image of these markers is connected to an information processing apparatus 5.

In the conventional method, optical markers or image markers are used as the markers 302. As a method of detecting the position and shape of the human body in addition to the method using the markers, position detection using a magnetic senor, a data glove using an optical fiber, and the like may be used.

The information processing apparatus 5 comprises a position detection unit 7, recording device 9, position determination unit 8, control unit 3, and image output unit 303.

The position detection unit 7 detects the positions of the human body parts using the markers in an image input from the camera 6. The recording device 9 records information about the position and shape of each virtual object which forms a virtual space. The position determination unit 8 determines which body part contacts a virtual object using the position of the body parts detected by the position detection unit 7 and the positions of respective virtual objects recorded in the recording device 9. The image output unit 303 generates an image of the virtual space using the information recorded in the recording device 9, and outputs the generated image to the HMD 300. The control unit 3 controls driving of the vibration motors 309 based on the determination result of the position determination unit 8.

With this arrangement, the position information of each body part is detected, and contact determination between the virtual object and body part can be made based on the detected position information. Then, the vibration motor 309 attached to a part closest to the contact part can be vibrated. The user perceives that the vibrating part contacts the virtual object.

The aforementioned contact feedback apparatus cannot generate a reactive force from an object unlike the force feedback display, but allows the user to simply perceive a contact with the object. Also, some attempts to improve its expressive power have been made.

For example, Jonghyun Ryu and Gerard Jounghyun Kim: "Using a Vibro-tactile Display for Enhanced Collision Perception and Presence", VRST'04, November 10 - 12, 2004, Hong Kong discloses a technique which measures in advance a vibration waveform upon colliding against an actual object, and drives vibration motors by simulating the measured vibration waveform at the time of collision against a virtual object. Since the vibration waveform upon colliding against an actual object varies depending on materials, the material of the colliding virtual object is expressed by executing such control.

However, the conventional contact feedback apparatus generates a stimulus at only the collision point against the virtual object, feedback of collision feeling upon colliding against the virtual object is insufficient. When a human body collides against an actual object, not only the colliding point against the object but also a surrounding body part is vibrated since an impact upon collision is dispersed. Conventionally, the vibration motor is driven based on the waveform upon collision. However, since only one vibration motor is driven, generation of a stimulus by simulating surrounding vibrations is not taken into consideration. A plurality of vibration motors are not effectively used, and feedback of an orientation of the surface of the contact virtual object, that of the shape of the colliding virtual object, and that of a direction to withdraw from an interference when the human body breaks into the virtual object, and the like cannot be sufficiently made.

### SUMMARY OF THE INVENTION

The present invention has been made in consideration of the aforementioned problems, and has as its object to provide a technique associated with stimulus feedback that considers feedback of a spread of a stimulus and that of information about a virtual object upon contact when a stimulus caused by a collision between the human body and virtual object is fed back to the human body.

The present invention in its first aspect provides an information processing apparatus as specified in claims 1 to 15.

The present invention in its second aspect provides an information processing method as specified in claims 16 and 17.

Further features of the present invention will become apparent from the following description of exemplary embodiments with reference to the attached drawings.

### BRIEF DESCRIPTION OF THE DRAWINGS

Fig. 1 is a block diagram showing the functional arrangement of a system according to the first embodiment of the present invention;

Fig. 2 is a view for explaining the vibration states to a hand 201 when the hand 201 collides against a physical object 304;

Fig. 3 is a view showing collision between a virtual human body 301 that simulates a hand 1 and virtual object 2;

Figs. 4A to 4C are graphs showing the stimulus generation timings in stimulus generators 110a to 110c in accordance with the distances from a collision point;

Figs. 5A to 5C are graphs showing the stimulus intensities in the stimulus generators 110a to 110c in accordance with the distances from the collision point;

Figs. 6A to 6C are graphs showing the waveforms of drive control signals sent from a controller 103 to the stimulus generators 110a to 110c;

Fig. 7 is a view for explaining the drive control for the three stimulus generators 110a to 110c when they are linearly arranged on a human body;

Fig. 8 is a view for explaining another mode of the drive control for the three stimulus generators 110a to 110c when they are linearly arranged on a human body;

Fig. 9 is a view for explaining the control of a plurality of stimulus generators 110 based on the relationship between the position of a collision point on a virtual human body that simulates the hand 1, and the positions of these stimulus generators 110;

Fig. 10A shows an example in which the surface of the virtual human body that simulates the hand is divided into cells;

Fig. 10B is a correspondence table showing the relationship between the collision point position and stimulus intensities around that position;

Figs. 11A to 11C are graphs showing the stimuli generated by the stimulus generators 110a to 110c when a contact between the virtual human body 301 that simulates the hand 1 and the virtual object is detected, and they are kept in contact with each other;

Figs. 12A and 12B are views showing a change in distance between the collision point and the stimulus generators when the shape of a hand as an example of the human body has changed;

Fig. 13 is a block diagram showing the functional arrangement of a conventional contact feedback apparatus using vibration motors;

Fig. 14 is a block diagram showing the hardware arrangement of a computer which is applicable to an information processing apparatus 105;

Fig. 15 is a flowchart of the drive control processing of the stimulus generators 110, which is executed by the information processing apparatus 105 parallel to the processing for presenting a virtual space image;

Fig. 16 is a view showing the positional relationship between the collision point and stimulus generators when a hand as an example of a virtual human body collides against a virtual object;

Fig. 17A shows a collision example between a virtual human body 161 and virtual object 162;

Fig. 17B shows a collision example between the virtual human body 161 and virtual object 162;

Fig. 18 is a view for explaining the processing for feeding back the surface direction upon collision between the virtual human body 161 and virtual object 162 to the user;

Fig. 19 is a view for explaining the distances between the collision point and stimulus generators when a hand as an example of a virtual human body collides against a virtual object;

Fig. 20 is a view for explaining the distances between the collision point and stimulus generators when a hand as an example of a virtual human body collides against a virtual object;

Fig. 21 is a view showing the positional relationship between the surface of a virtual object and the stimulus generators when a hand as an example of a virtual human body interferes with the virtual object;

Fig. 22 is a view for explaining the processing for calculating "distances" used in the fifth embodiment;

Fig. 23 is a view for explaining the processing for calculating "distances" used in the fifth embodiment;

Fig. 24 is a view for explaining the processing for calculating "distances" used in the fifth embodiment; and

Fig. 25 is a view for explaining the processing for calculating "distances" used in the fifth embodiment.

### DESCRIPTION OF THE EMBODIMENTS

Preferred embodiments of the present invention will be described in detail hereinafter with reference to the accompanying drawings.

### [First Embodiment]

### <About System Arrangement>

This embodiment relates to a system which presents a virtual space to the user, and feeds back collision feeling to the human body of the user in consideration of the spread of stimulus upon collision when a virtual object on the virtual space collides against the human body of the user.

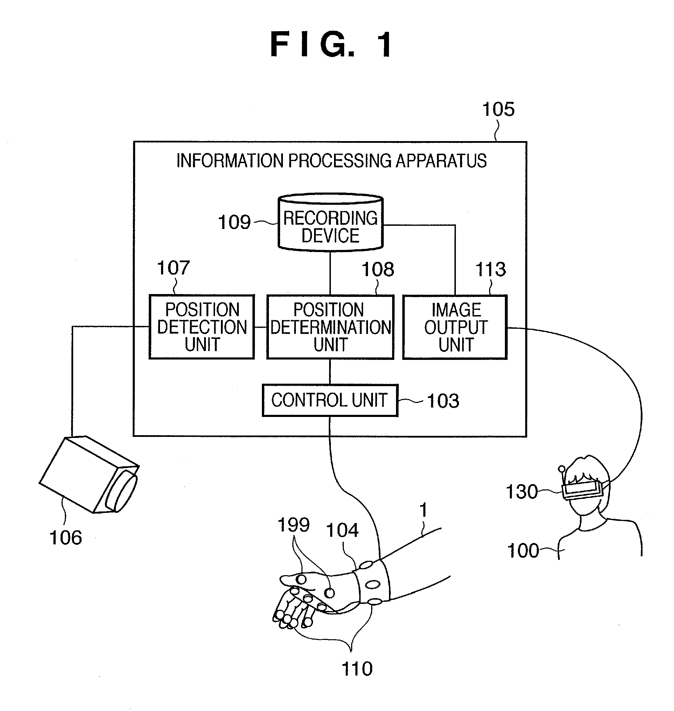

Fig. 1 is a block diagram showing the functional arrangement of the system according to this embodiment.

Reference numeral 100 denotes a user who experiences the virtual space. The user 100 wears an HMD 130 on own head. The user 100 experiences the virtual space by viewing an image displayed on a display unit of the HMD 130 before the eyes.

Note that the detailed arrangement required for the user to experience the virtual space is not the gist in the following description, and it will be explained briefly. An information processing apparatus 105 acquires the position and orientation of the HMD 130, which are measured by a sensor equipped on the HMD 130. The apparatus 105 generates an image of the virtual space that can be seen from a viewpoint having the acquired position and orientation. The apparatus 105 displays the generated virtual space image on the display unit of the HMD 130 via an image output unit 113. Since there are various methods of acquiring the position and orientation of the HMD 130 and various practical methods of generating a virtual space image, and they are not the gist of the following description, no more explanation will be given.

Reference numeral 1 denotes a hand of the user 100. One or more markers 199 are arranged on the hand 1, and a wearable unit 104 is attached to it. A plurality of stimulus generators 110 are mounted on this wearable unit 104. These stimulus generators 110 apply stimuli to the human body (the hand 1 in case of Fig. 1). Stimuli generated by the stimulus generators 110 are preferably mechanical vibration stimuli. As the stimulus generators 110, for example, vibration motors are preferably used since they are compact and lightweight to relatively easily mount a plurality of motors, and generate stimuli enough to be perceived by the human body.

As the stimulus generator 110 used to apply a mechanical vibration stimulus, various devices may be adopted. For example, a voice-coil type stimulus generator 110 that generates mechanical vibration stimuli may be used, or a stimulus generator 110 which applies a stimulus by actuating a pin that is in contact with the human body using an actuator such as a piezoelectric element, polymeric actuator, and the like may be used. Alternatively, a stimulus generator 110 that presses against the skin surface with a pneumatic pressures may be used.

The stimulus to be applied is not limited to mechanical stimulus, and electric stimulus, temperature stimulus, or the like may be used as the stimulus generator 110 as long as it stimulates a haptic sense. As the electric stimulus, a device that applies a stimulus using a micro-electrode array or the like is available. Also as the temperature stimulus, a device that uses a thermoelectric element or the like is available.

In this way, the plurality of stimulus generators 110 that can apply stimuli to a part wearing the wearable unit 104 are arranged on the wearable unit 104. This wearable unit 104 is easy to put on and take off since it has a glove or band shape, but any unit can be used as the wearable unit 104 as long as the user can appropriately wear the unit 104 so that stimuli generated by the stimulus generators 110 are transmitted to the human body. In the description of Fig. 1, the user wears the wearable unit 104 on the hand 1 but may wear it on other parts (arm, waistline, leg, and the like). Also, the number of stimulus generators 110 arranged on the wearable unit 104 is not particularly limited. In the following description of this embodiment, assume that a plurality of stimulus generators 110 are attached to respective parts of the user.

Note that a "part" simply indicates an arm, leg, or the like. In some cases, a combination of a plurality of parts such as "arm and body" may be generally interpreted as a "part".

A plurality of cameras 106 are laid out at predetermined positions on the physical space and are used to capture images of markers attached to respective parts of the user. The layout position of each camera 106 is not particularly limited, and its position and orientation may be appropriately changed. Frame images (physical space images) captured by the cameras 106 are output to a position detection unit 107 included in the information processing apparatus 105.

A recording device 109 holds shape information and position and orientation information of respective virtual objects which form the virtual space. For example, when each virtual object is defined by polygons, the recording device 109 holds data of normal vectors and colors of polygons, coordinate value data of vertices which form each polygon, texture data, data of the layout position and orientation of the virtual object, and the like. The recording device 109 also holds shape information of each of virtual objects that simulate the human body (respective parts) of the user (to be referred to as a virtual human body), and information indicating the relative position and orientation relationship among the respective parts.

The position detection unit 107 detects the markers 199 in the real space images input from the cameras 106, and calculates the positions and orientations of the respective parts of the user including the hand 1 using the detected markers. Then, the position detection unit 107 executes processing for laying out the virtual human bodies that simulate respective parts of the human body at the calculated positions and orientations of the respective parts. As a result, the virtual human bodies that simulate the respective parts of the user are laid out on the virtual space to have the same positions and orientations as those of the actual parts. As a technique to implement such processing, for example, a state-of-the-art technique called motion capture technique is known, and is. Note that the virtual human bodies that simulate the respective parts need not be displayed.

The reason why the virtual human body is set is as follows. That is, when shape data of a human body, e.g., a hand, is prepared in advance and is superimposed on an actual hand, the information processing apparatus can calculate an interference (contact) between the hand and a virtual object, as will be described later. In this way, even when a certain part of the human body other than the part where the markers are set has caused an interference with the virtual object, the part of the human body that causes the interference can be detected.

When an interference is detected at only marker positions or when a large number of markers are laid out, the virtual human body need not always be set. It is more desirable to determine an interference with the virtual object by setting the virtual human body, so as to detect interferences with the virtual objects at every positions on the human body or to reduce the number of markers.

A position determination unit 108 executes interference determination processing between the virtual human body and another virtual object (a virtual object other than the human body; to be simply referred to as a virtual object hereinafter). Since this processing is a state-of-the-art technique, a description thereof will not be given. The following description will often make an expression "collision between the human body and virtual object", but it means "collision between a virtual object that simulates a certain part of the human body and another virtual object" in practice.

A control unit 103 executes control processing for driving the stimulus generators 110 arranged on a part simulated by the virtual human body that interferes with (collides against) the virtual object.

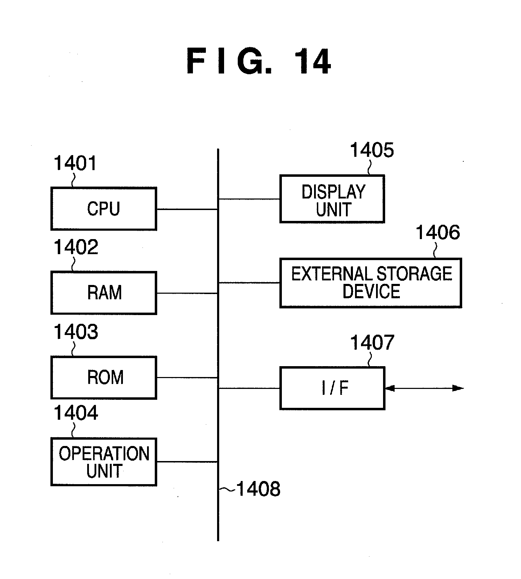

Fig. 14 is a block diagram showing the hardware arrangement of a computer which is applicable to the information processing apparatus 105.

Reference numeral 1401 denotes a CPU which controls the overall computer using programs and data stored in a RAM 1402 and ROM 1403, and executes respective processes to be described later, which will be explained as those to be implemented by the information processing apparatus 105. That is, when the position detection unit 107, position determination unit 108, control unit 103, and image output unit 113 shown in Fig. 1 are implemented by software, the CPU 1401 implements the functions of these units by executing this software. Note that software programs that implement these units are saved in, e.g., an external storage device 1406 to be described later.

The RAM 1402 has an area for temporarily storing programs and data loaded from the external storage device 1406, and an area for temporarily storing various kinds of information externally received via an I/F (interface) 1407. Also, the RAM 1402 has a work area used when the CPU 1401 executes various processes. That is, the RAM 1402 can provide various areas as needed.

The ROM 1403 stores setting data, a boot program, and the like.

Reference numeral 1404 denotes an operation unit, which comprises a keyboard, mouse, and the like. When the operator of this computer operates the operation unit 1404, the operator can input various instructions to the CPU 1401.

Reference numeral 1405 denotes a display unit which comprises a CRT, liquid crystal display, or the like. The display unit 1405 can display the processing results of the CPU 1401 by means of images, text, and the like.

The external storage device 1406 is a large-capacity information storage device represented by a hard disk drive. The external storage device 1406 saves an OS (operating system), and programs and data required to make the CPU 1401 execute respective processes (to be described later) which will be explained as those to be implemented by the information processing apparatus 105. The external storage device 1406 also saves various kinds of information held by the recording device 109 in the above description. Furthermore, the external storage device 1406 saves information described as given information.

The programs and data saved in the external storage device 1406 are loaded onto the RAM 1402 as needed under the control of the CPU 1401. When the CPU 1401 then executes processes using the loaded programs and data, this computer executes respective processes (to be described later) which will be described as those to be implemented by the information processing apparatus 105.

The I/F 1407 is connected to the aforementioned cameras 106, respective stimulus generators 110, and HMD 130. Note that the cameras 106, stimulus generators 110, and HMD 130 may have dedicated I/Fs.

Reference numeral 1408 denotes a bus which interconnects the aforementioned units.

### <About Collision between Human Body and Physical Object>

A vibration state acting on the human body upon collision between the human body and physical object will be described below. In the following description, "hand" will be used as an example of the human body. However, in the following description, the same applies to any other body parts.

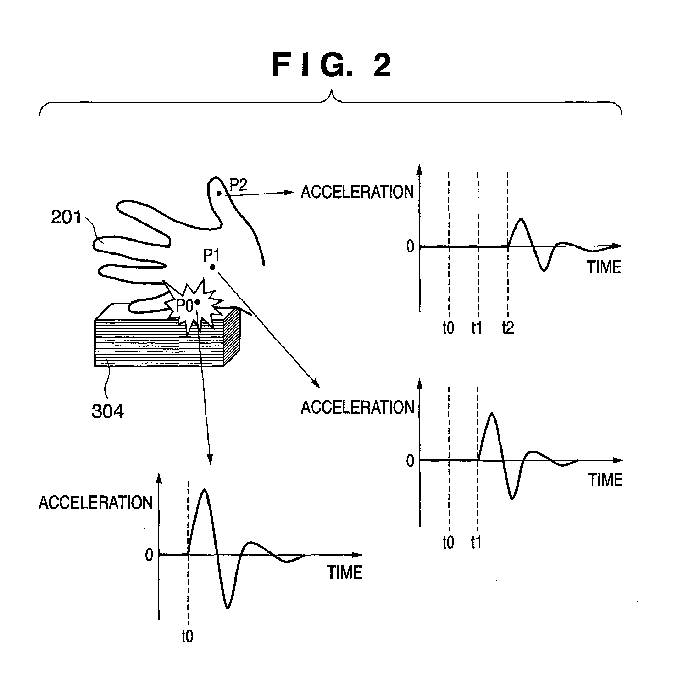

Fig. 2 is a view for explaining the vibration states on a hand 201 when the hand 201 collides against a physical object 304. In Fig. 2, reference symbol P0 denotes a position (collision point) where the hand 201 collides against the physical object 304. The collision point P0 is located at the edge on the little finger side of a palm of the hand 201, a point P1 is located at the center of the palm of the hand 201, and a point P2 is located on a thumb portion.

Furthermore, graphs in Fig. 2 respectively show the vibration states of the skin at the points P0, P1, and P2 when the hand 201 collides against the physical object 304 at the collision point P0. In each graph, the abscissa plots the time, and the ordinate plots the acceleration. In the graphs, a time t 0 indicates the time when the hand 201 collides against the physical object 304. At the collision point P0, a skin vibration due to collision is generated at the time t0. At a time t1 delayed after the time t0, vibration is generated at the point P1. At a time t2 after the time t1, vibration of the skin surface is generated at the point P2.

In this way, upon collision with the physical object, not only vibration is generated at the position of the collision point, but also an impact of the collision is transmitted to positions around that point. Vibrations around the collision point position suffer delays for predetermined time periods, and attenuations of their intensities. The delay in the generation of vibration is determined by the distance from the collision point position. In Fig. 2, vibration start times delay like t1 and t2 with increasing distance from the point P0 to the point P1 and to the point P2. On the other hand, the vibration intensities are attenuated as the points are farther away from the collision point P0. In Fig. 2, the vibration intensities (amplitudes) become smaller as the distances from the point P0 to the points P1 and P2 become larger.

Fig. 2 illustrates basic vibration transmission upon collision. However, in practice, the transmission time period and vibration intensity change depending on how respective parts of the human body readily cause vibrations and how they readily transmit vibrations. Therefore, more accurately, the characteristics of the respective parts of the human body are preferably taken into consideration in addition to the distances from the collision point. Also, the impact upon collision changes depending on the characteristics such as the velocity or acceleration of the human body or object upon collision, the hardness of the object, and the like.

In consideration of the above description, this embodiment has as its object to allow the user to experience collision feeling with higher reality by simulating, using the plurality of stimulus generators 110, the impact upon collision between the virtual human body of the user and the virtual object.

The following description will be given taking collision between the hand 1 of the user and the virtual object as an example. Also, the same explanation applies to collision between other parts of the user and the virtual object.

### <About Collision between Virtual Human Body and Virtual Object>

Detection of collision between the virtual human body and virtual object will be described first. The position determination unit 108 executes this detection, as described above. The position detection unit 107 calculates the positions and orientations of the respective parts of the user including the hand 1, as described above. The position detection unit 107 then executes the processing for laying out virtual objects which simulate the respective parts at the calculated positions and orientations of the respective parts. Therefore, a virtual human body that simulates the hand 1 is laid out at the position and orientation of the hand 1 of the user, as a matter of course.

The position determination unit 108 executes the interference determination processing between this virtual human body that simulates the hand 1 and the virtual object. If the unit 108 determines that they interfere with each other, it specifies the position of the interference (collision point).

The plurality of stimulus generators 110 are located on the hand 1, as described above, and their positions of the locations are measured in advance. Therefore, the positions of the stimulus generators 110 on the virtual human body that simulates the hand 1 can be specified.

Hence, the control unit 103 determines the drive control contents to be executed for each stimulus generator 110 using the position of the collision point and those of the respective stimulus generators 110.

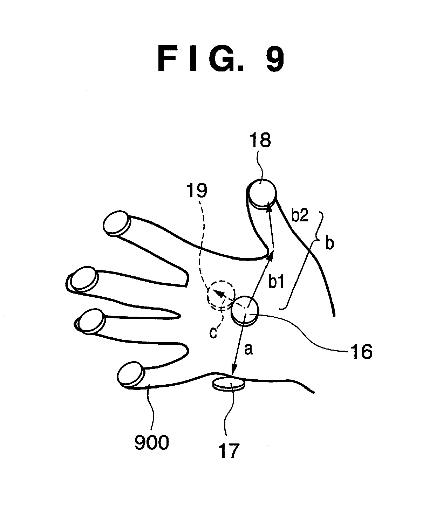

Fig. 9 is a view for explaining the control of the plurality of stimulus generators 110 based on the relationship between the position of the collision point on the virtual human body that simulates the hand 1, and the positions of the plurality of stimulus generators 110.

Referring to Fig. 9, reference numeral 900 denotes a virtual human body that simulates the hand 1. Reference numerals 16, 17, 18, and 19 denote stimulus generators located on the hand 1. Note that Fig. 9 illustrates the stimulus generators 16 to 19 for the purpose of the following description, and are not laid out on the virtual human body 900.

The stimulus generator 19 is laid out on the back side of the hand. The following description will be given under the assumption that the position of the collision point is that of the stimulus generator 16. However, practically the same description will be given irrespective of the position of the collision point.

The control unit 103 calculates the distances between the position 16 of the collision point and those of the stimulus generators 16 to 19. The control unit 103 may calculate each of these distances as a rectilinear distance between two points, or may calculate them along the virtual human body 900. As a method of calculating distances along the virtual human body, the virtual human body is divided into a plurality of parts in advance. In order to calculate the distances between points which extend over a plurality of parts, distances via joint points between parts may be calculated. For example, the method of calculating the distances along the virtual human body 900 will be described below. The distance between the position 16 of the collision point and the stimulus generator 16 is zero. The distance between the position 16 of the collision point and the stimulus generator 17 is a from a rectilinear distance between the two points. In order to calculate the distance between the position 16 of the collision point and the stimulus generator 18, a distance b1 from the position 16 of the collision point to a joint point between the palm of the hand and the thumb is calculated first. Furthermore, a distance b2 from the joint point to the stimulus generator 18 is calculated, and a distance b as a total of these distances is determined as that between the position 16 of the collision point and the stimulus generator 18. In order to calculate the distance between the position 16 of the collision point and the stimulus generator 19, a distance can be calculated in a direction to penetrate through the virtual human body 900, it is given by c in Fig. 9. In the above example, the virtual human body is divided into the palm portion of the hand and the thumb portion. Alternatively, the parts may be divided into joints.

The control unit 103 executes the drive control of the stimulus generators so as to control stimuli generated by the stimulus generators based on the distances from the position 16 of the collision point to the respective stimulus generator. Control examples of the stimulus generators by the control unit 103 will be explained below.

### <About Stimulus Control>

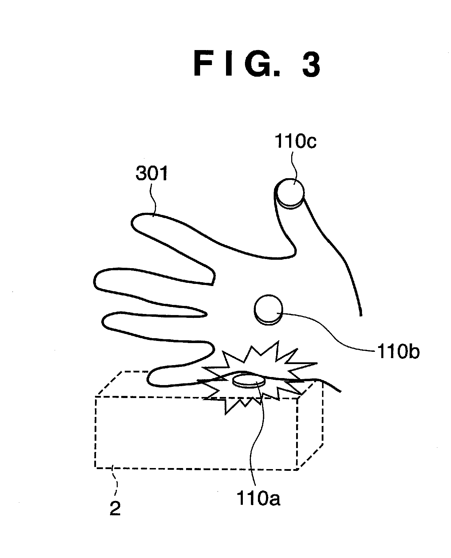

Fig. 3 shows collision between a virtual human body 301 which simulates the hand 1, and a virtual object 2. In Fig. 3, reference numerals 110a, 110b, and 110c respectively denote stimulus generators arranged on the hand 1. The stimulus generator 110a is located at the edge on the little finger side of a palm of the hand 1, the stimulus generator 110b is located at the center of the palm of the hand 1, and the stimulus generator 110c is located on a thumb portion.

Assume that the position of the stimulus generator 110a on the virtual human body 301 collides against the virtual object 2. In this case, the stimulus generators 110b and 110c are closer to the position of the collision point (that of the stimulus generator 110a) in the order named.

In such situation, some control examples for the stimulus generators 110a to 110c will be described below.

### <Stimulus Control Example 1>

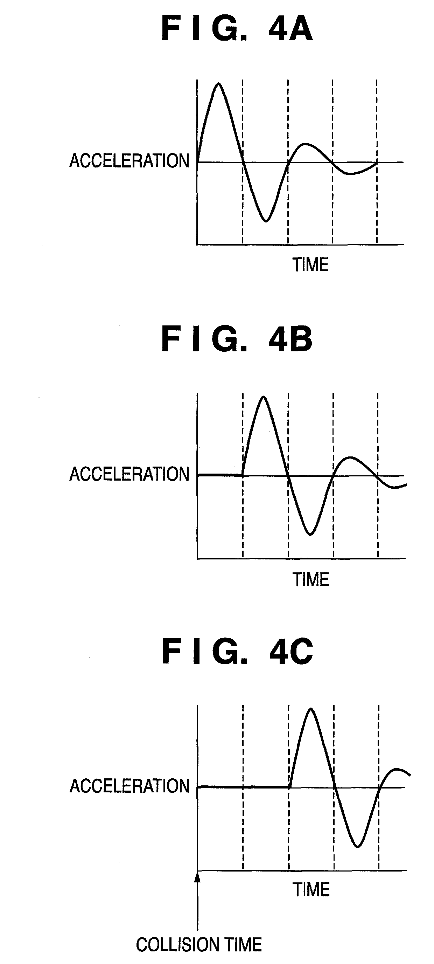

Figs. 4A to 4C are graphs showing the generation timings of stimuli by the stimulus generators 110a to 110c in accordance with the distances from the collision point. Fig. 4A is a graph showing the stimulus generation timing by the stimulus generator 110a. Fig. 4B is a graph showing the stimulus generation timing by the stimulus generator 110b. Fig. 4C is a graph showing the stimulus generation timing by the stimulus generator 110c. In these graphs, the abscissa plots the time, and the ordinate plots the acceleration (since the stimulus generators 110a to 110c generate mechanical vibration stimuli and make operations such as vibrations and the like).

As shown in Figs. 4A to 4C, the stimulus generator 110a located at the collision point begins to generate a vibration simultaneously with generation of an impact (at the collision time), while the stimulus generator 110b far from the collision point begins to generate a vibration after an elapse of a predetermined period of time from the collision time. The stimulus generator 110c farther from the collision point begins to generate a vibration after an elapse of a predetermined period of time from the vibration start timing of the stimulus generator 110b.

In this manner, the stimulus generators 110a to 110c begin to generate vibrations later behind the collision time with increasing distance from the collision point. With this control, the spread of the vibration from the collision point can be expressed by the stimulus generators 110a to 110c.

Therefore, the control unit 103 executes the drive control of the stimulus generator 110a located at the collision point so that it begins to generate a vibration simultaneously with generation of an impact (at the collision time). After an elapse of a predetermined period of time, the control unit 103 executes the drive control of the stimulus generator 110b, thus making it begin to generate a vibration. After an elapse of another predetermined period of time, the control unit 103 executes the drive control of the stimulus generator 110c, thus making it begin to generate a vibration.

### <Stimulus Control Example 2>

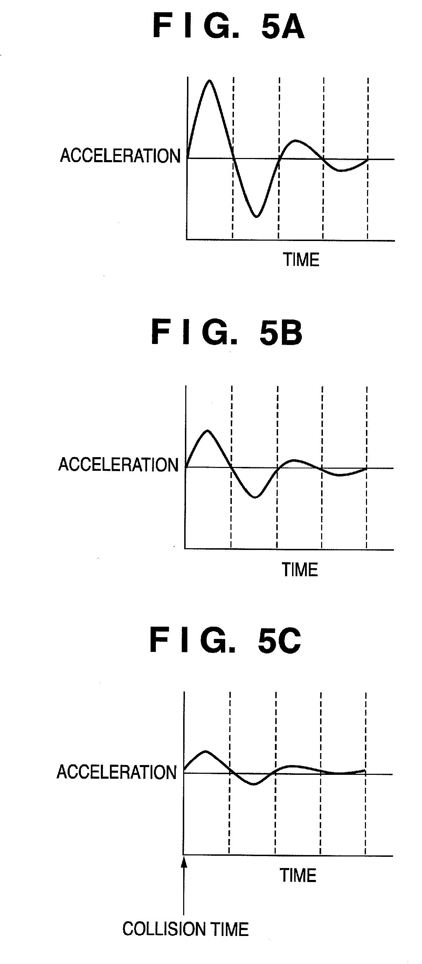

Figs. 5A to 5C are graphs showing the stimulus intensities by the stimulus generators 110a to 110c in accordance with the distances from the collision point. Fig. 5A is a graph showing the stimulus intensity by the stimulus generator 110a. Fig. 5B is a graph showing the stimulus intensity by the stimulus generator 110b. Fig. 5C is a graph showing the stimulus intensity by the stimulus generator 110c. In these graphs, the abscissa plots the time, and the ordinate plots the acceleration.

As shown in Figs. 5A to 5C, the collision point comes under the influence of collision most strongly. A vibration to be generated by the stimulus generator 110a located at the collision point is larger than those generated by the stimulus generators 110b and 110c, which are located at positions other than the collision point. Furthermore, since the stimulus generator 110b is closer to the collision point than the stimulus generator 110c, a vibration to be generated by the stimulus generator 110b is larger than that generated by the stimulus generator 110c.

In this way, the vibrations generated by the stimulus generators 110a to 110c become smaller with increasing distance from the collision point (distance when a path is defined on the surface of the hand 1).

Therefore, the control unit 103 sets a large amplitude in the stimulus generator 110a located at the collision point to make it generate a stimulus with a predetermined intensity. The control unit 103 sets an amplitude smaller than that of the stimulus generator 110a in the stimulus generator 110b to make it generate a stimulus with an intensity lower than the stimulus intensity generated by the stimulus generator 110a. The control unit 103 sets an amplitude smaller than that of the stimulus generator 110b in the stimulus generator 110c to make it generate a stimulus with an intensity lower than the stimulus intensity generated by the stimulus generator 110b.

### <Stimulus Control Example 3>

In Figs. 4A to 4C and Figs. 5A to 5C, the case of mechanical stimuli (vibration stimuli) has been explained. Alternatively, even electric stimuli, temperature stimuli, and the like can provide the same effect by making control to change the stimulus timings and stimulus intensities. As such example, a case will be explained below wherein the stimulus generators 110a to 110c are driven differently by changing the drive waveform to be input to the stimulus generators 110a to 110c.

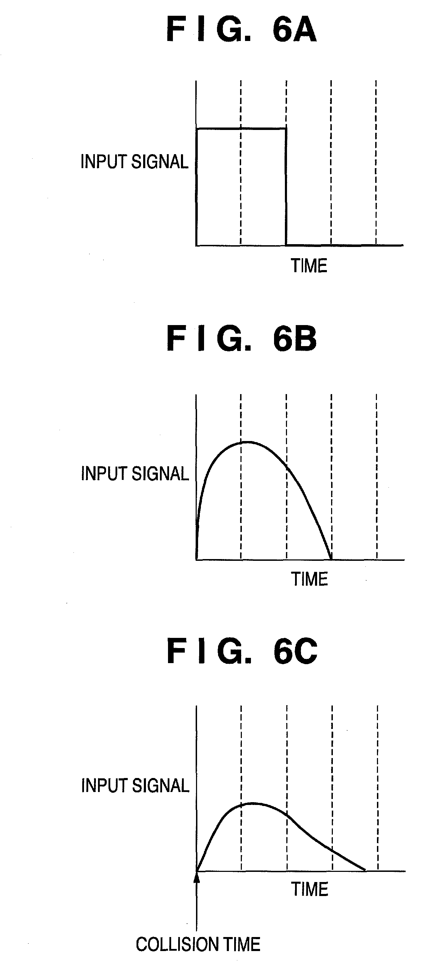

Figs. 6A to 6C are graphs showing the waveforms of a drive control signal from the control unit 103 to the stimulus generators 110a to 110c. Fig. 6A is a graph showing the waveform of an input signal to the stimulus generator 110a. Fig. 6B is a graph showing the waveform of an input signal to the stimulus generator 110b. Fig. 6C is a graph showing the waveform of an input signal to the stimulus generator 110c. In these graphs, the abscissa plots the time, and the ordinate plots the signal level.

As shown in Figs. 6A to 6C, since the stimulus generator 110a is located at the collision point, it must be driven at the collision time. Therefore, in Figs. 6A to 6C, a pulse signal which rises at the collision time is input to the stimulus generator 110a as an input signal. Since the stimulus generator 110b is far from the collision point, the signal level of an input signal to the stimulus generator 110b rises more moderately at the collision time than that to the stimulus generator 110a. Likewise, the signal level of that input signal is attenuated more moderately at the collision time than that to the stimulus generator 110a. Furthermore, since the stimulus generator 110c is farther from the collision point, the signal level of an input signal to the stimulus generator 110c rises more moderately at the collision time than that to the stimulus generator 110b. Likewise, the signal level of that input signal is attenuated more moderately than that to the stimulus generator 110b.

Note that the stimulus generators 110a to 110c which receive such input signals may feed back any stimuli. That is, irrespective of stimuli fed back by the stimulus generators 110a to 110c, a stimulus increase/decrease pattern by the stimulus generator can be controlled by varying the input signal waveform in this way.

Note that the waveform shapes and the number of times of vibrations in the graphs shown in Figs. 4A to 6C are illustrated for the sake of descriptive convenience, and this embodiment is not limited to them. Therefore, for example, the vibration waveforms at respective positions upon collision against the hand may be measured in advance, and the stimulus generators 110a to 110c may be controlled to reproduce the measured waveforms.

### <About Drive Control of Stimulus Generator 110>

The drive control of the respective stimulus generators 110a to 110c based on the distance relationship between the collision point and the stimulus generators 110a to 110c will be described below using simple examples.

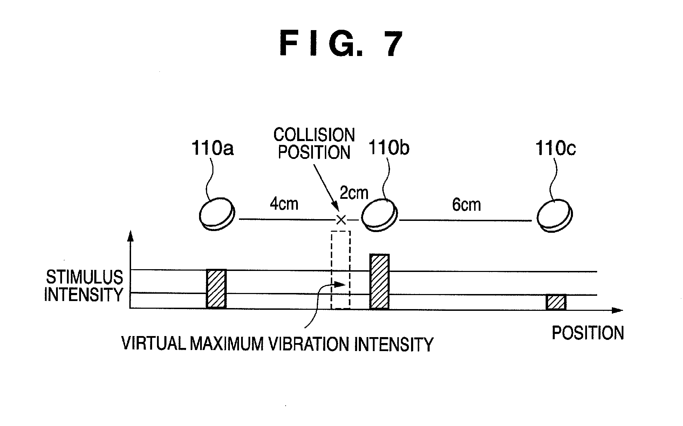

Fig. 7 is a view for explaining the drive control for the three stimulus generators 110a to 110c when they are linearly arranged on the human body. Furthermore, in Fig. 7, assume that a position indicated by "x" is a collision point between the virtual human body and virtual object.

In the description using Fig. 7, as a control example of the stimulus generators 110a to 110c, the stimulus intensities generated by the stimulus generators 110a to 110c are changed in accordance with the distances from the collision point. Note that the control examples of the stimulus generators 110a to 110c upon varying the stimulation start timings and input signal waveforms in the respective stimulus generators 110a to 110c can be explained by appropriately modifying the following description.

The control unit 103 calculates the distances from the position of the collision point (collision position) to those of the stimulus generators 110a to 110c. In case of Fig. 7, the distance from the collision position to the stimulus generator 110a is 4 cm, that from the collision position to the stimulus generator 110b is 2 cm, and that from the collision position to the stimulus generator 110c is 6 cm. That is, the stimulus generators 110b, 110a, and 110c are closer to the collision position in this order.

Hence, the stimulus generators 110a to 110c undergo the drive control to increase the stimuli to be generated in the order of the stimulus generators 110b, 110a, and 110c. For example, when each stimulus generator comprises a vibration motor, it can apply a stronger stimulus to the human body by rotating the vibration motor faster. On the other hand, when each stimulus generator applies a stimulus to the human body by pressing against the skin surface by a pneumatic pressure, it can apply a stronger stimulus to the human body by increasing the pneumatic pressure.

That is, a stimulus intensity I (e.g., a maximum amplitude of the vibration waveform) to be generated by the stimulus generator located at a distance r from the collision position is expressed by I = f(r) using a monotone decreasing function f.

Note that Fig. 7 illustrates by a dotted line, at the collision position, a stimulus intensity (virtual maximum vibration intensity) determined in consideration of the velocity or acceleration upon collision.

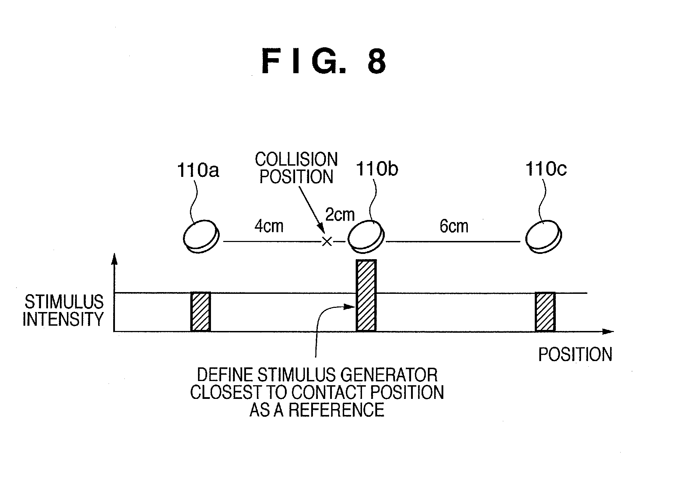

Fig. 8 is a view for explaining another mode of the drive control for the three stimulus generators 110a to 110c when they are linearly arranged on the human body. Furthermore, in Fig. 8, assume that a position indicated by "x" is a collision point between the virtual human body and virtual object.

In the description using Fig. 8, as a control example of the stimulus generators 110a to 110c, the stimulus intensities generated by the stimulus generators 110a to 110c are changed in accordance with the distances from the collision point. Note that the control examples of the stimulus generators 110a to 110c upon varying the stimulation start timings and input signal waveforms in the respective stimulus generators 110a to 110c can be explained by appropriately modifying the following description. In this way, stimuli can be fed back to positions closer to the collision point.

The control unit 103 calculates the distances from the position of the collision point (collision position) to those of the stimulus generators 110a to 110c. In case of Fig. 8, the distance from the collision position to the stimulus generator 110a is 4 cm, that from the collision position to the stimulus generator 110b is 2 cm, and that from the collision position to the stimulus generator 110c is 6 cm. That is, the stimulus generators 110b, 110a, and 110c are closer to the collision position in this order. Hence, the position of the stimulus generator 110b is defined as a reference position, and a virtual stimulus intensity is set at this reference position. Then, the surrounding stimulus generators 110a and 110c undergo the drive control to decrease their stimulus intensities in descending order of distance to the reference position. That is, a stimulus intensity I (e.g., a maximum amplitude of the vibration waveform) to be generated by the stimulus generator located at a distance r from the reference position (the position of the stimulus generator 110b) is expressed by I = f(r) using a monotone decreasing function f.

In case of Fig. 8, since the distance from the reference position (the position of the stimulus generator 110b) to the stimulus generator 110a is equal to that from the reference position to the stimulus generator 110c, the stimulus intensity to be generated by the stimulus generator 110a is set to be equal to that to be generated by the stimulus generator 110c in this case.

The aforementioned methods may be used in combination. For example, as described above with reference to Fig. 8, the stimulus generator closest to the collision position undergoes the drive control at a stimulus intensity determined based on the velocity or acceleration of collision. The remaining stimulus generators undergo the drive control at stimulus intensities according to the absolute distances from the collision position, as described above with reference to Fig. 7. As a result, stimuli according to a stimulus amount required upon collision can be fed back.

In the above description, the stimulus intensity is calculated according to the distance between the position of the collision point and the position of the stimulus generator. However, the stimulus intensity to be generated by the stimulus generator may be calculated in consideration of the impact transmission state upon collision which is measured in advance, or the intervention of the skin, bone, muscle, and the like. For example, the relation between a distance from the collision point and a vibration may be expressed as mathematical expressions or a correspondence table based on vibration transmission upon collision between the human body and physical object, which is measured in advance, thus determining the stimulus intensity. Also, transmission of a stimulus amount may be calculated based on the amounts of the skin, bone, and muscle that intervene between the collision point position and stimulus generator.

For example, using a variable s which represents the influence of the skin, a variable b which represents the influence of the bone, a variable m which represents the influence of the muscle, and a variable r which represents the distance from the collision position to the stimulus generator, an stimulus intensity I to be generated by this stimulus generator may be expressed by I = f(r, s, b, m) using the function f.

The thicknesses (distances) of the skin, bone, and muscle which intervene along a path from the collision point position to the stimulus generator are input to the respective variables, and the stimulus intensity is determined in consideration of the influences of attenuation of the vibration transmission by respective human body components. By controlling the stimulus generators around the collision point position by adding components that consider impact transmission of the human body, more improved impact feeling can be expressed. The above description has been given using the stimulus intensity. Likewise, the delay time period of generation of a stimulus can also be determined.

In the aforementioned example, the drive control of the stimulus generators is executed based on the distances from respective stimulus generators arranged on the hand 1 to the collision point between the virtual human body that simulates the hand 1, and the virtual object. Therefore, when the virtual object collides against a virtual human body that simulates another part (e.g., a leg), the drive control of stimulus generators is executed based on the distances from this collision point to the stimulus generators arranged on the leg. Also, all the stimulus generators arranged on the hand 1 need not always be driven, and only stimulus generators within a predetermined distance range from the collision point may undergo the drive control.

### <About General Processing to be Executed by Information Processing Apparatus 105>

As described above, the information processing apparatus 105 executes processing for presenting a virtual space image to the HMD 130, and also processing for applying, to the user, by using the stimulus generator 110, stimuli based on collision between the virtual human body of the user who wears this HMD 130 on the head, and the virtual object.

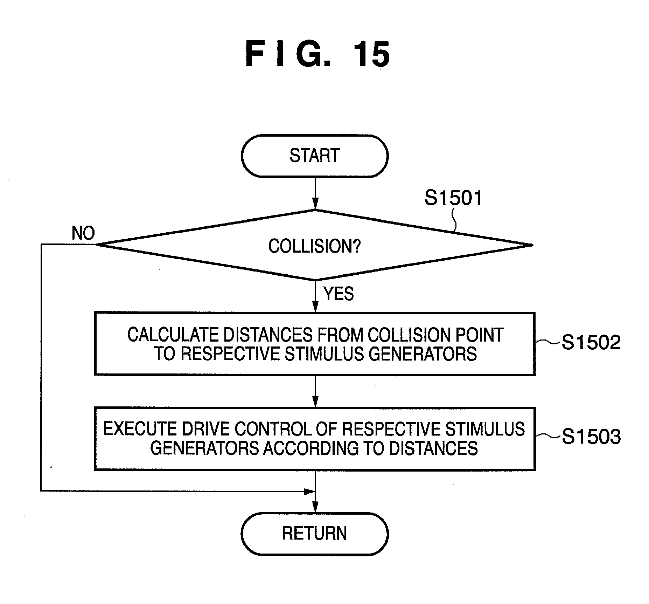

Fig. 15 is a flowchart of the drive control processing of the stimulus generators 110, which is executed by the information processing apparatus 105 parallel to the processing for presenting the virtual space image. Note that a program and data required to make the CPU 1401 execute the processing according to the flowchart shown in Fig. 15 are saved in the external storage device 1406. The program and data are loaded onto the RAM 1402 as needed under the control of the CPU 1401. Since the CPU 1401 then executes the processing using the loaded program and data, the information processing apparatus 105 implements respective processes to be described below.

The CPU 1401 checks in step S1501 if collision has occurred between the virtual human body corresponding to each part of the human body of the user, and the virtual object. This processing corresponds to that to be executed by the position determination unit 108 in the above description. If no collision has occurred, the processing according to the flowchart of Fig. 15 ends, and the control returns to the processing for presenting a virtual space image. On the other hand, if collision has occurred, the CPU 1401 specifies the position of a collision point, and the process advances to step S1502.

The drive processing of the stimulus generators in Fig. 15 and the rendering processing of the virtual space image need not be synchronously executed, and they may be attained as parallel processes to be processed at optimal update rates.

In step S1502, the CPU 1401 calculates the distances between the position of the collision point and the plurality of stimulus generators attached to the collided part. In the above example, the CPU 1401 calculates the distances between the positions, on the virtual human body that simulates the hand 1, of the respective stimulus generators arranged on the hand 1, and the position of the collision point on the virtual human body that simulates the hand 1.

In step S1503, the CPU 1401 executes the drive control of the respective stimulus generators to feed back stimuli according to the distances. This control delays the stimulation start timing or weakens the stimulus intensity with increasing distance from the collision point in the above example.

### <About Effects and Modification Examples>

The spread range of the stimulus to be applied to the human body by the drive control for the stimulus generators will be described below. When the stimulus intensity is changed based on the positional relationship between the collision point position and stimulus generators, the stimulus intensity weakens as increasing distance from the collision point position. The stimulus generator which is separated by a given distance or more generates a stimulus equal to or weaker than that perceived by the human body. The stimulus generator which is farther away from the collision point ceases to operate since the stimulus intensity becomes zero practically or approximately. In this manner, when the stimulus intensity is changed based on the positional relationship between the collision point position and stimulus generators, the range of stimulus generators which are controlled to generate stimuli upon collision are naturally determined.

On the other hand, as another control method, the operation range of the stimulus generators may be determined in advance. For example, when the collision point position with the virtual object falls within the range of the hand, at least the stimulus generators attached to the hand may be operated. Even when there is a stimulus generator which is set with a stimulus equal to or weaker than a stimulus intensity perceived by the human body, if it is attached within the range of the hand, it is controlled to generate a stimulus with a predetermined stimulus amount.

Conversely, it may be determined in advance to operate the stimulus generators within only a predetermined range. For example, when the collision point position with the virtual object falls within the range of the hand, the stimulus generators within only the range of the hand are operated, and the surrounding stimulus generators outside the range are not driven. In this case, when collision point position falls within the range of the hand, the stimulus generators attached to the arm are not operated.

As described above, the arrangement that simulates the impact transmission upon collision has been explained. However, when the collision velocity or acceleration value between the virtual human body and virtual object is small, the aforementioned control may be skipped. When the virtual human body and virtual object slowly collide against each other, since an impact force is also weak, the surrounding stimulus generators need not always be driven. For this reason, the velocity or acceleration of the virtual human body or virtual object is set in advance, and when they collide against each other at that value or more, the surrounding stimulus generators are also driven to simulate impact feeling. In case of collision at the predetermined velocity or acceleration or less, only one stimulus generator at or near the collision point position is controlled to be operated.

After the plurality of stimulus generators around the collision point position are driven to simulate an impact, when the virtual human body and virtual object are kept in contact with each other, a given stimulus is generated to make the user perceive a contact point position.

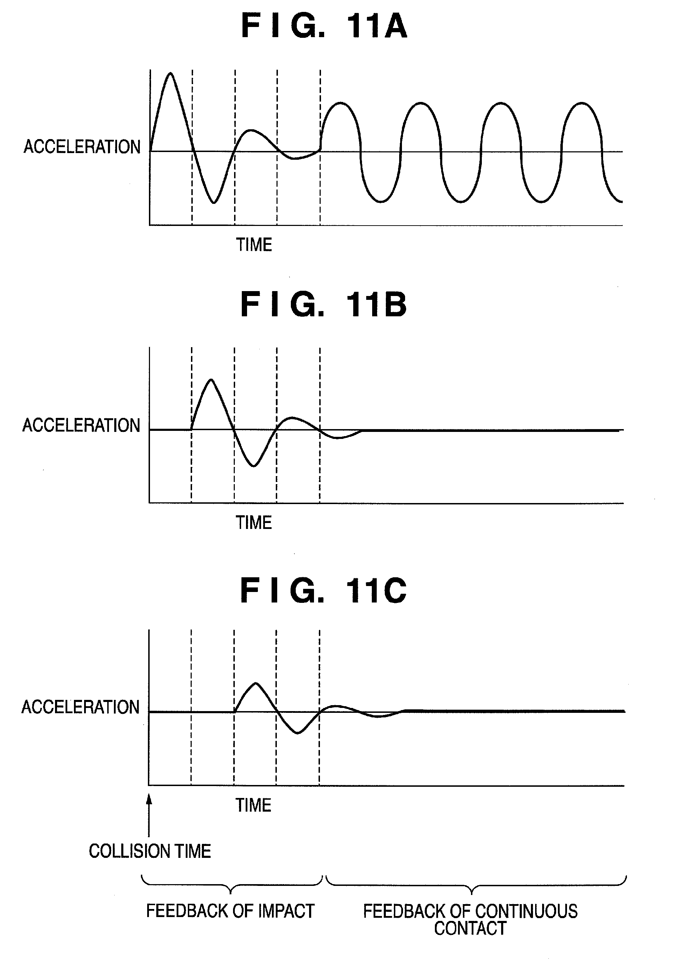

Figs. 11A to 11C are graphs showing the stimuli generated by the stimulus generators 110a to 110c when a contact between the virtual human body 301 that simulates the hand 1 and the virtual object is detected, and they are kept in contact with each other. Fig. 11A is a graph showing the stimulus intensity generated by the stimulus generator 110a. Fig. 11B is a graph showing the stimulus intensity generated by the stimulus generator 110b. Fig. 11C is a graph showing the stimulus intensity generated by the stimulus generator 110c. In these graphs, the abscissa plots the time, and the ordinate plots the acceleration.

As shown in Figs. 11A to 11C, when a predetermined period of time elapses after the drive control of the stimulus generators 110a to 110c, or when the stimulus intensity generated by the stimulus generator 110c becomes equal to or lower than a predetermined amount, the drive control of the stimulus generators 110a to 110c to feed back stimuli ends. Then, in order to notify the user of continuation of the contact by means of the stimulus, only the stimulus generator closest to the contact point position undergoes the drive control. The drive control method is not particularly limited. In Figs. 11A to 11C, since the stimulus generator 110a is located at the position closest to the contact point position, only the stimulus generator 110a undergoes the drive control.

### <Modification Example 2>

This embodiment is suitably applied to a technique which feeds back contact feeling to the surface of a virtual object based on the positional relationship between an actual human body position and the virtual object which virtually exists on the physical space, in combination with the method of detecting the human body position. As the methods of detecting the position and orientation of the human body (part), a method using marks and cameras or a method of obtaining the human body shape and position by applying image processing to video images captured by cameras may be used. In addition, any other methods such as a method using a magnetic sensor or an acceleration or angular velocity sensor, a method of acquiring the hand shape using a data glove using an optical fiber or the like, and the like may be used. With the aforementioned measurement methods, the motion of the human body can be reflected to the virtual human body.

As elements used to determine the stimulus intensity to be generated by the stimulus generator, the characteristics such as the velocity or acceleration of the virtual human body or virtual object upon collision, the hardness of the object, and the like may be added. For example, when the virtual human body moves fast upon collision against the virtual object, the stimulus generator is driven to generate a strong stimulus. On the other hand, when the virtual human body moves slowly, the stimulus generator is driven to generate a weak stimulus. In this case, the velocity or acceleration of the virtual human body may be calculated from the method of detecting the human body position, or that of each part may be detected by attaching a velocity sensor or acceleration sensor to each part and using the value of the velocity sensor or acceleration sensor.

When the collided virtual object is hard as its physical property, the stimulus generator is driven to generate a strong stimulus. On the other hand, when the virtual object is soft, the stimulus generator is driven to generate a weak stimulus. These different stimulus intensities determined in this way may be implemented by applying biases to the plurality of stimulus generators, or such implementation method may be used only when the stimulus intensity of the stimulus generator located at the collision point position (or closest to that position) is determined. In this case, parameters associated with the hardness of the virtual object must be determined in advance and saved in the external storage device 1406.

As the parameters of the stimulus to be changed depending on the characteristics such as the velocity or acceleration of collision or the hardness of the virtual object, not only the intensity but also the stimulus generation timing may be changed. For example, when the virtual human body collides against the virtual object at a high velocity or when it collides against a hard virtual object, the stimulus generation start timing difference by the respective stimulus generators may be set to be a relatively small value.

Furthermore, in consideration of the fact that the human body gets used to the stimulus, the stimulus intensity may be changed. For example, when the virtual human body collides against the virtual object many times within a short period of time, and the stimulus generators generate stimuli successively, the human body gets used to the stimuli, and does not feel the stimuli sufficiently. In such case, even when the virtual human body collides against the virtual object at the same velocity or acceleration as the previous collision, the stimulus intensity is enhanced, so that the human body feels the stimulus more obviously.

The aforementioned control method may be used solely or in combination. For example, the control for delaying the stimulus generation timing and that for attenuating the stimulus intensity described using Figs. 4A to 4C and Figs. 5A to 5C may be combined, so that the stimulus generator farther from the collision position may apply a stimulus with a weak stimulus intensity at a delayed timing.

When a change in stimulus due to the influences of the skin, bone, muscle, and the like is taken into consideration, as described above, calculations may be made based on the amounts of the skin, bone, muscle, and the like which exist along a path to the respective stimulus generators. In this case, models of the skin, bone, muscle, and the like and human body shape must be prepared in advance.

Also, a stimulus determination method unique to a specific human body part may be set. For example, at the terminal part of the human body such as a finger or the like, the entire finger largely vibrates by impact transmission upon collision. In order to feed back a stimulus by simulating not only vibration transmission on the skin but also the influence of such impact, a larger vibration amount than a stimulus calculated from the collision position may be set in the stimulus generator attached to the fingertip.

As another method of calculating the positional relationship between the collision point position and the respective stimulus generators, the virtual object of each part of the human body may be divided into a plurality of regions in advance, and the positional relationship between the collision point position of the virtual object and surrounding stimulus generators may be determined based on the divided regions.

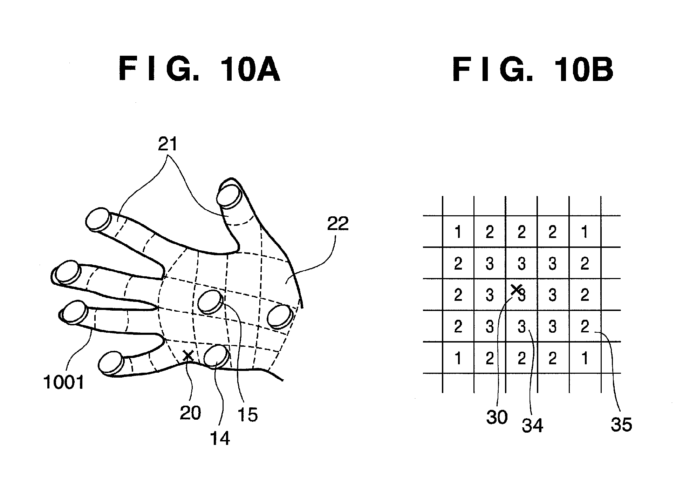

Fig. 10A shows an example in which the surface of the virtual human body that simulates the hand is divided into cells. Fig. 10A illustrates the divisions of cells by the dotted lines. In this example, cells are divided by rectangles. However, the shape to be divided is not limited to such specific shape, and an arbitrary polygonal shape or free shape may be used. In Fig. 10A, cells 21 with the stimulus generators and empty cells 22 exist. Alternatively, the stimulus generators may be equipped at hand positions corresponding to all cells.

Fig. 10B is a correspondence table showing the relationship between the collision point position and stimulus intensities around that position. In this correspondence table, a central grid 30 corresponds to the collision point position.

Numerical values "1" to "3" in grids represent the stimulus intensities as relative values. That is, when a stimulus generators exists in a cell corresponding to 3 x 3 grids near the collision point position, the stimulus intensity to be generated by this stimulus generator is set to have a value corresponding to "3". As shown in Fig. 10B, the stimulus intensity values decrease with increasing distance from the collision point position in this correspondence table.

The method of describing relative values in the correspondence table is effectively used for a case in which the stimulus to be generated by the stimulus generator at or near the collision point position is to be changed based on the velocity or acceleration upon collision. In this example, three levels of relative values "1" to "3" are used. However, the present invention is not limited to such specific values. In place of the relative values, practical stimulus amounts such as accelerations and the like may be set as absolute values. Also, the values set in the correspondence tables are not limited to the stimulus intensities, and stimulus generation delay times, frequency components in an input signal, stimulus waveforms, and the like may be used. The values of the correspondence table may be dynamically changed depending on the velocity or acceleration upon collision or the collision position in place of using identical values constantly.

For example, assume that collision against the virtual object has occurred at the position of a cell 20. In this case, the position of a stimulus generator 14 closest to the collision point position applies to the grid 30, and the intensity of a stimulus to be generated by the stimulus generator 14 is set to be a value corresponding to "3". Since a stimulus generator 15 is located at a cell two cells above the stimulus generator 14, it corresponds to a grid two grids above the grid 30. Therefore, the intensity of a stimulus to be generated by the stimulus generator 15 is set to be a value corresponding to "2".

In this manner, the virtual human body that simulates a given part is divided into a plurality of cells, and the relative positional relationship between the collision point and respective stimulus generators is determined for each cell. Then, using the correspondence table that describes the stimulus intensities near the position of the collision point, the stimulus intensity to be generated by the stimulus generator near the collision point is determined.

In Figs. 10A and 10B, the case has been explained wherein the same correspondence table is used irrespective of the position of a cell where collision has occurred. Alternatively, a unique correspondence table may be set for each cell. By setting a unique correspondence table for each cell, the impact transmission upon collision can be simulated in accordance with the surrounding shape at the human body position where that cell exists, and the states of the skin, bone, muscle, and the like.

The method of dividing the human body surface into a plurality of regions in advance has been explained. Alternatively, the division of regions may be done at the time of collision, and regions to be divided may be dynamically changed in accordance with the collision position, the velocity or acceleration of collision, the direction of collision, and the like.

### [Second Embodiment]

This embodiment will explain a case wherein the distances between the collision point and stimulus generators change in correspondence with a change in shape of the human body.

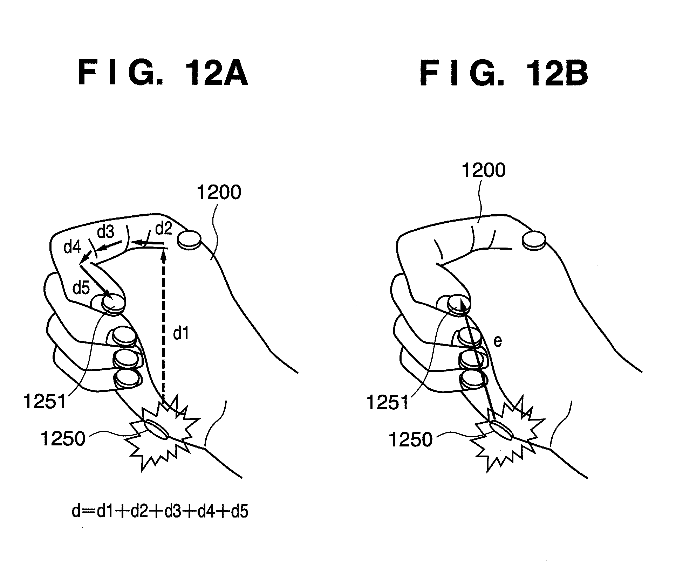

Figs. 12A and 12B show a change in distance between the collision point and stimulus generators when the shape of the hand as an example of the human body has changed. In Figs. 12A and 12B, reference numeral 1200 denotes a virtual human body that simulates the hand; and 1250 and 1251, stimulus generators arranged on the hand.

In clasping and unclasping states of the hand, the hand has quite different shapes. For example, as shown in Fig. 12A, when the position of the stimulus generator 1250 corresponds to a collision point, the distance from the collision point to the stimulus generator 1251 assumes different values in the clasping and unclasping states of the hand. In Fig. 12A, a distance d from the collision point to the stimulus generator 1251 is calculated along the virtual human body that simulates the hand. In Fig. 12A, d = d1 + d2 + d3 + d4 + d5. Note that d1 to d5 respectively correspond to the distance from the position of the collision point to the base of the virtual human body of the forefinger, and the lengths of virtual human bodies of respective parts that form the forefinger.

However, in practice, since the stimulus from the collision point is transmitted to the position of the stimulus generator 1251 via the palm of the hand, if the stimulus generator 1251 is controlled using this distance d, the stimulus generation timing may be too late or the stimulus may be too weak. Hence, in such case, it is desirable to feed back an impact which is directly transmitted from the palm of the hand to the fingertip.

Thus, when it is detected that the human bodies are in contact with each other, as shown in Fig. 12B, the distance from the collision point position is calculated in consideration of their continuity. In Fig. 12B, a distance e from the collision point to the position of the stimulus generator 1251 via the palm of the hand is calculated. By controlling the stimulus generator 1251 using this distance e, a stimulus that accurately simulates impact transmission can be generated.

In the unclasping state of the hand, i.e., when the fingers are not in contact with other human body part such as the palm of the hand or the like, the distance may be calculated in a direction along a natural shape of the human body like in the first embodiment. Switching of this control can be attained by determining the human body state by the position detection unit 107. More specifically, the states of the human bodies are checked, and if the human bodies are in contact with each other, the distance from the collision point position to the stimulus generator can be calculated by assuming the contact point as a continuous shape, as described above.

In the above description, the case of a change in shape of the hand has been explained. This embodiment is not limited to only the hand part, and can be applied to any other parts as long as they can be in contact with each other like the front arm and upper arm, the arm and body, and the like.

### [Third Embodiment]

This embodiment will explain a case wherein the surface direction of a virtual object at a collision point is presented to the user by driving a plurality of stimulus generators based on the positional relationship between a virtual human body and the virtual object upon collision between the virtual human body and virtual object.

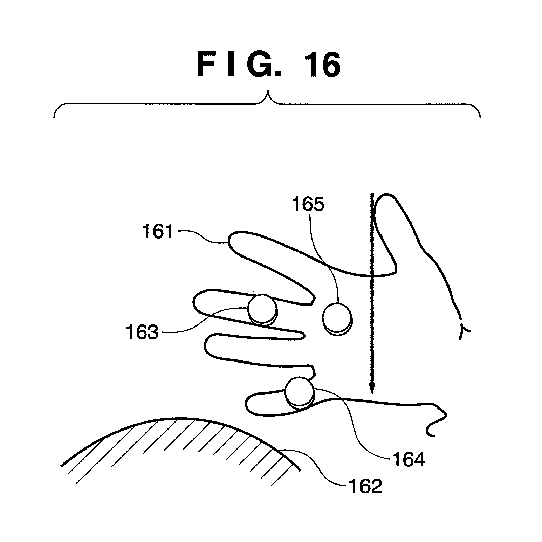

Fig. 16 shows the positional relationship between the collision point and stimulus generators when the hand as an example of the virtual human body collides against a virtual object. In Fig. 16, reference numeral 161 denotes a virtual human body that simulates the hand; 162, a virtual object; and 163, 164, and 165, stimulus generators arranged on the hand. When the virtual human body 161 collides against the virtual object 162, there are various surface directions of the collision point on the virtual object 162.

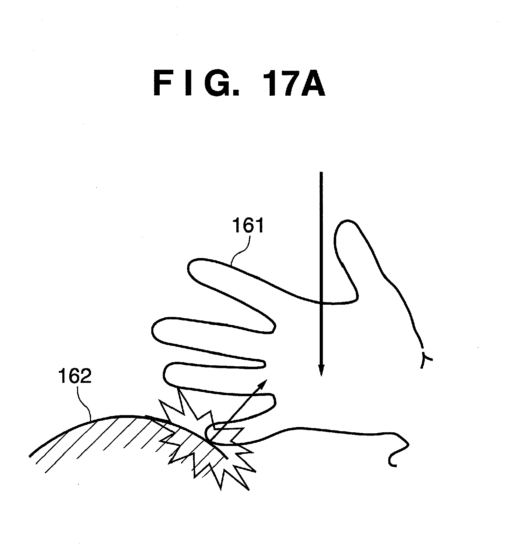

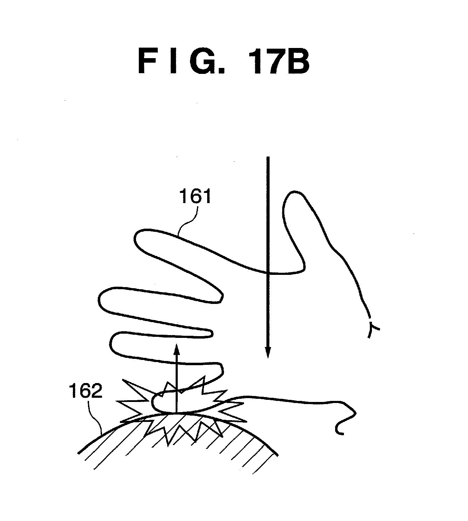

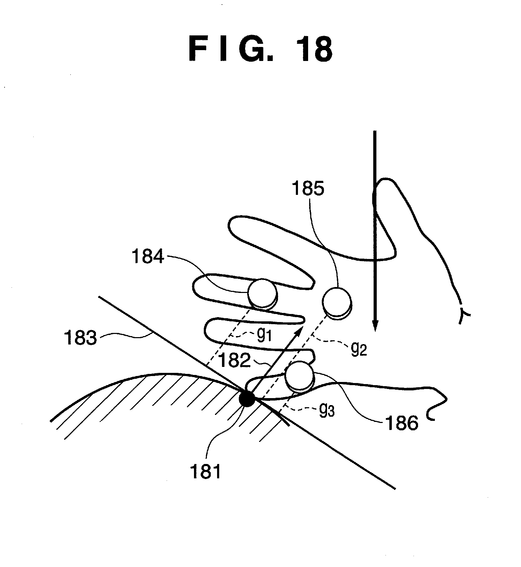

For example, the virtual human body 161 may collide against a horizontal portion of the virtual object 162, as shown in Fig. 17B, or it may collide against a slope portion of the virtual object 162, as shown in Fig. 17A. In this embodiment, as shown in Fig. 18, a surface 183 (reference surface), which passes through a contact point 181 and has, as a perpendicular, a normal 182 at the contact point on the virtual object 162 (on the virtual object), is defined. Then, rectilinear distances g1, g2, and g3 from this surface 183 to respective stimulus generators 184, 185, and 186 are calculated.

As the virtual human body that simulates the human body or the virtual object, volume data having no concept of the surface direction, e.g., voxels may be used. In such case, for example, a known Marching Cube method is applied to the volume data to reconstruct an isosurface, thus detecting the surface direction.

Using the distances g1 to g3 calculated in this way, control to delay the simulation start timings of the corresponding stimulus generators 184 to 186, to attenuate their stimulus intensities, and so forth can be executed in proportion to the values of the distances g1 to g3. With the above control, a feeling that the surface of the virtual object 162 has passed along the surface of the user's hand can be obtained, thus feeding back the surface direction to the user.

### [Fourth Embodiment]

This embodiment will explain a case wherein the shape of a collided virtual object is fed back to the user by driving a plurality of stimulus generators based on the positional relationship between the virtual human body and virtual object when the virtual human body collides against the virtual object.

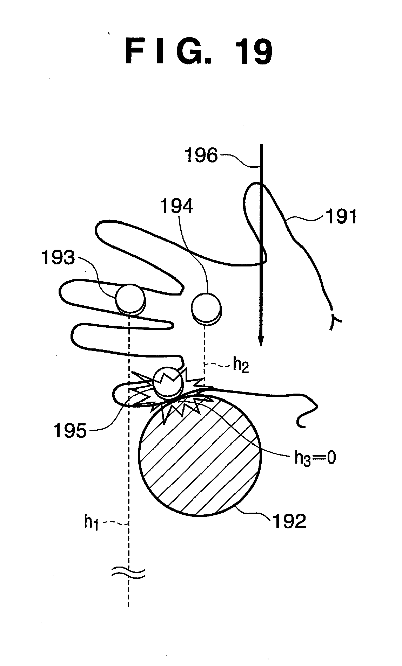

Fig. 19 is a view for explaining the distances between the collision point and stimulus generators when the hand as an example of the virtual human body collides against the virtual object. In Fig. 19, reference numeral 191 denotes a virtual human body that simulates the hand; 192, a virtual object; and 193, 194, and 195, stimulus generators arranged on the hand.

When the virtual human body 191 collides against the virtual object 192, not only the surface direction of the virtual object is fed back as in the third embodiment, but also the detailed object shape may be presented. In this embodiment, as shown in Fig. 19, the size (length) of "distance" is defined as that of a vector which connects each of the stimulus generators 193 to 195 of the virtual human body 191 and the virtual object 192, and is parallel to a moving direction 196 of the virtual human body.

In case of Fig. 19, when the virtual human body 191 collides against the virtual object 192, the stimulus generators apply stimuli in accordance with distances h1, h2, and h3 between the stimulus generators 193, 194, and 195, and the virtual object 192. For example, the control to delay the stimulation start timings, to attenuate the stimulus intensities, and so forth can be executed in proportion to the sizes of the distances. When it is determined that no virtual object 192 exists in the moving direction, for example, the stimulus generator 193 which has a distance to another virtual object equal to or larger than a predetermined size may be controlled not to apply a stimulus. With the above control, the detailed shape including the size of the virtual object can be presented.

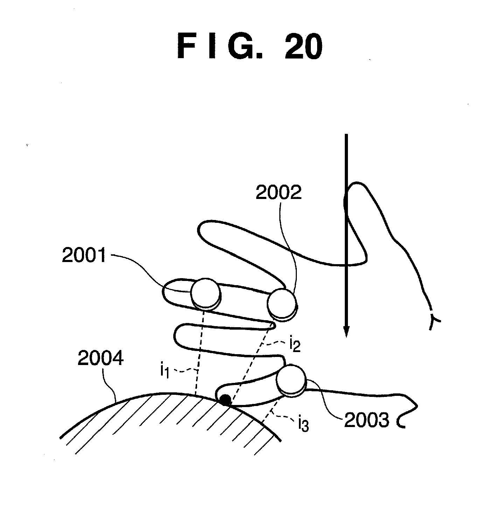

As shown in Fig. 20, the distances as the shortest distances between respective stimulus generators 2001, 2002, and 2003, and the surface of a virtual object 2004 may be used. In Fig. 20, let i1 be the distance from the virtual object 2004 to the stimulus generator 2001, i2 be that to the stimulus generator 2002, and i3 be that to the stimulus generator 2003. Using such distances, when any of these distances reaches a value (e.g., zero) that represents collision, stimuli according to the distances to the stimulus generators are applied.

Each distance calculation method may be changed as needed depending on information to be presented by a stimulus, the type of stimulus generator, the position of the stimulus generator, and the like.

### [Fifth Embodiment]

In the aforementioned embodiments, the control at the time of contact between the virtual human body and virtual object has been explained. In this embodiment, by driving the respective stimulus generators based on the positional relationship between the stimulus generators and virtual object, when the virtual human body breaks into the virtual object, a direction to break away from an interference between the virtual human body and virtual object due to such break-in is fed back to the user.

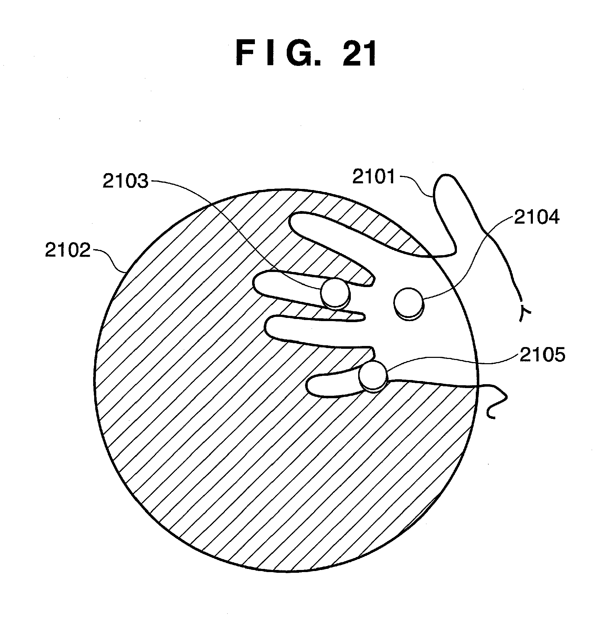

Fig. 21 shows the positional relationship between the surface of the virtual object and stimulus generators when the hand as an example of the virtual human body interferes with the virtual object. In Fig. 21, reference numeral 2101 denotes a virtual human body that simulates the hand; 2102, a virtual object; and 2103, 2104, and 2105, stimulus generators arranged on the hand.

As shown in Fig. 21, the virtual human body 2101 may break into the virtual object 2102. As a result of such break-in, an interference occurs between the virtual human body 2101 and virtual object 2102. In order to make the user break away from such interference state, this embodiment teaches the direction to break away from the interference using the stimulus generators.

As "distance" used in this embodiment, various "distances" described in the first to fourth embodiments can be used. Some examples of the processing for calculating the "distance" which is applicable to this embodiment will be described below.

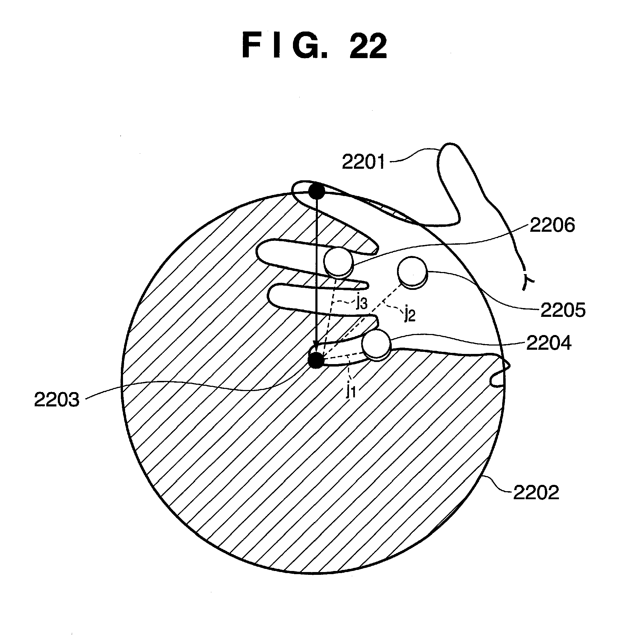

Fig. 22 is a view for explaining the processing for calculating the "distance" used in this embodiment. In Fig. 22, reference numeral 2201 denotes a virtual human body that simulates the hand; 2202, a virtual object; and 2204, 2205, and 2206, stimulus generators arranged on the hand. Reference numeral 2203 denotes one point of the virtual human body 2201, which is located deepest inside the virtual object 2202. The processing for calculating this point is known to those who are skilled in the art. For example, a point on the virtual human body 2201, which has the largest average of distances from respective points that form the surface of the virtual object 2202, is calculated as this point.

In this case, rectilinear distances j1 to j3 from the position 2203 to the stimulus generators 2204 to 2206 are calculated. Then, the control for the respective stimulus generators 2204 to 2206 is executed using the distances j1 to j3.

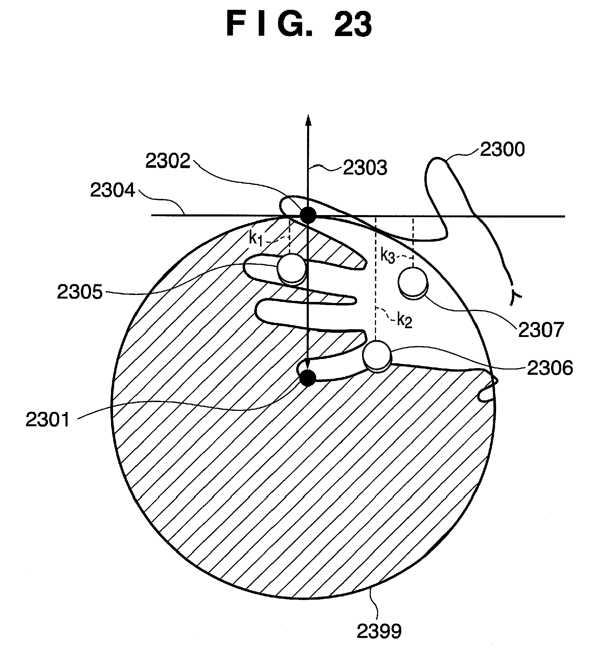

Fig. 23 is a view for explaining the processing for calculating the "distance" used in this embodiment. In Fig. 23, reference numeral 2300 denotes a virtual human body that simulates the hand; 2399, a virtual object; and 2305, 2306, and 2307, stimulus generators arranged on the hand. Reference numeral 2301 denotes one point of the virtual human body 2300, which is located deepest inside the virtual object 2399. The processing for calculating such point is as described above. Reference numeral 2302 denotes one point on the surface of the virtual object 2399, which has the shortest distance from the point 2301. Reference numeral 2303 denotes a normal at the point 2302 on the virtual object 2399; and 2304, a surface which has the normal 2303 and contacts the point 2302.

In this case, lengths (distances) k1 to k3 of line segments perpendicularly drawing from the positions of the stimulus generators 2305 to 2307 onto the surface 2304 are calculated. Then, the control for the respective stimulus generators 2305 to 2307 is executed using the distances k1 to k3, respectively.

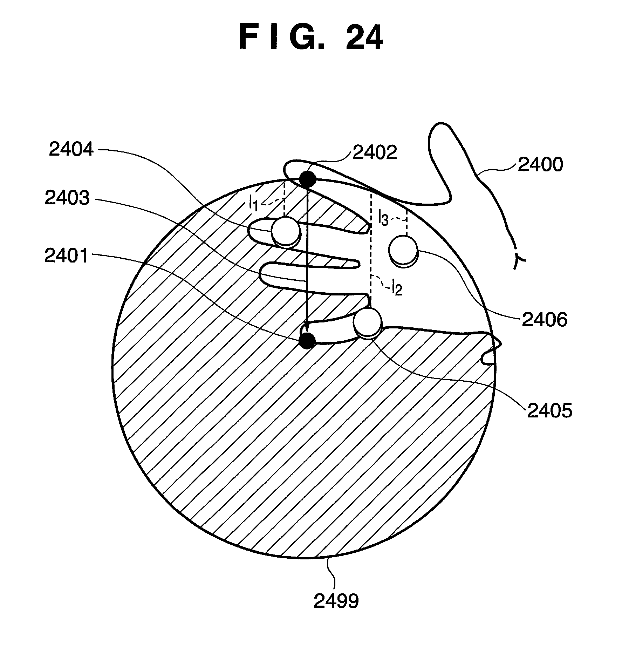

Fig. 24 is a view for explaining the processing for calculating the "distance" used in this embodiment. In Fig. 24, reference numeral 2400 denotes a virtual human body that simulates the hand; 2499, a virtual object; and 2404, 2405, and 2406, stimulus generators arranged on the hand. Reference numeral 2401 denotes one point of the virtual human body 2400, which is located deepest inside the virtual object 2499. The processing for calculating such point is as described above. Reference numeral 2402 denotes one point on the surface of the virtual object 2499, which has the shortest distance from the point 2401.

In this case, distances upon extending lines from the positions of the stimulus generators 2404 to 2406 in a direction along a vector from the point 2402 toward the point 2401 to positions that intersect the surface of the virtual object 2499 are calculated as 11, 12, and 13. Then, the control for the respective stimulus generators 2404 to 2406 is executed using the distances 11 to 13.

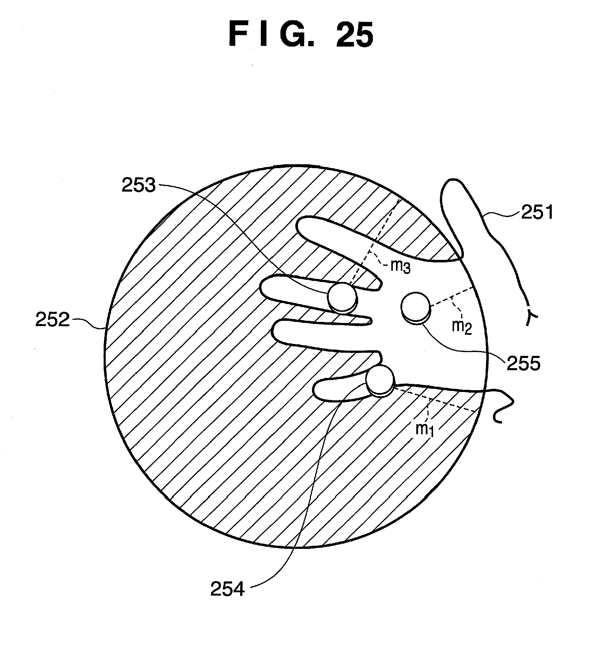

Fig. 25 is a view for explaining the processing for calculating the "distance" used in this embodiment. In Fig. 25, reference numeral 251 denotes a virtual human object that simulates the hand; 252, a virtual object; and 253, 254, and 255, stimulus generators arranged on the hand.

In this case, shortest distances from the positions of the stimulus generators 253 to 255 to the surface of the virtual object 252 are respectively calculated as m3, m1, and m2. Then, the control for the respective stimulus generators 253 to 255 is executed using the distances m3, m1, and m2.

In Figs. 22 to 25, only the stimulus generator which exists in the virtual object is controlled.

In this way, the control to attenuate the stimulus intensities in proportion to the sizes of the distances shown in Figs. 22 to 25, to intermittently stimulate while delaying the stimulus generation timings according to the distances, to add a pattern to stimuli or to stop stimulation when the distance is equal to or larger than a given value, and so forth can be executed.

Each of the aforementioned distance calculation methods may be applied to only the stimulus generator located at the position of an interference between the virtual human body and virtual object, and those at non-interference positions may be controlled not to generate stimuli. The aforementioned control can aid to break away when the virtual human body interferes with the virtual object.

The respective distance calculation method may be changed as needed depending on the type of stimulus generator, the position of the stimulus generator, and the like.

In the respective embodiments, the second embodiment can be practiced at the same time irrespective of practice of other embodiments, or can be switched according to the human body and the positional relationship between the human body and virtual object. The first, third, and fourth embodiments cannot be practiced at the same time, but they may be switched depending on the contents of stimuli to be fed back. For example, upon feeding back the spread of stimuli, the first embodiment is used. Upon presenting the surface direction of the virtual object, the third embodiment is used. Upon presenting the shape of the virtual object, the fourth embodiment is used.

Alternatively, a use method that switches the embodiments as needed according to the relationship between the human body and virtual object is also effective. For example, the first embodiment is normally used to express a feeling of interference with higher reality while observing the virtual object. When the virtual object that interferes with the human body is occluded by another virtual object, the embodiment to be used is switched to the third or fourth embodiment. Then, with the method of recognizing the surface direction or shape of the interfering virtual object, workability verification or the like using a virtual environment can be effectively done.

The fifth embodiment can be practiced simultaneously with the first, third, or fourth embodiment. However, since the stimulus intensity becomes enhanced more than necessity due to superposition of stimuli, when the degree of interference between the human body and virtual object becomes large, a method of switching from the first, third, or fourth embodiment to the fifth embodiment is desirable.

### [Other Embodiments]

The objects of the present invention are also achieved as follows. That is, a recording medium (or storage medium), which records a program code of software (computer program) that can implement the functions of the aforementioned embodiments, is supplied to a system or apparatus. A computer (or a CPU or MPU) of the system or apparatus reads out and executes the program code stored in the recording medium. In this case, the program code itself read out from the recording medium implements the functions of the aforementioned embodiments, and the recording medium (computer-readable recording medium) which stores the program code constitutes the present invention.

When the computer executes the readout program code, an operating system (OS) or the like, which runs on the computer, executes some or all actual processes based on an instruction of the program code. The present invention includes a case wherein the functions of the aforementioned embodiments are implemented by these processes.

Furthermore, assume that the program code read out from the recording medium is written in a memory equipped on a function expansion card or a function expansion unit, which is inserted in or connected to the computer. The present invention also includes a case wherein the functions of the aforementioned embodiments may be implemented when a CPU or the like arranged in the expansion card or unit then executes some or all of actual processes based on an instruction of the program code.

When the present invention is applied to the recording medium, that recording medium stores program codes corresponding to the aforementioned flowcharts.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

A plurality of stimulus generators (110), which are used to apply stimuli to the human body, and are laid on the human body of the user, are controlled. A position determination unit (108) determines whether or not a virtual object which forms a virtual space where the user exists is in contact with the human body. When the contact has occurred, a control unit (103) executes drive control of each of a plurality of stimulus generators (110), which are located near a place where the contact is determined, based on the positional relationship between the virtual object and the stimulus generators.

## Claims

1. An information processing apparatus for controlling a plurality of stimulus generators which are used to apply stimuli to a human body of a user and are laid out on the human body, **characterized by** comprising:
a determination unit adapted to determine whether or not a virtual object which forms a virtual space where the user exists is in contact with the human body; and
a drive control unit adapted to execute drive control for each of a plurality of stimulus generators, which are located near a place of the contact determined by said determination unit, based on a positional relationship between the place and the stimulus generators.

2. The apparatus according to claim 1, **characterized in that** said determination unit determines whether or not a virtual human body as a virtual object that simulates the human body is in contact with the virtual object, and when said determination unit determines that the virtual human body is in contact with the virtual object, said determination unit specifies the place of the contact.

3. The apparatus according to claim 2, **characterized in that** said drive control unit comprises:
a distance calculation unit adapted to calculate distances between the place on the virtual human body, and positions of a plurality of stimulus generators which are located near the place; and
a unit adapted to execute the drive control of each of the plurality of stimulus generators located near the place based on the calculated distances.

4. The apparatus according to claim 3, **characterized in that** said distance calculation unit calculates the distances from the place on the virtual human body to the plurality of stimulus generators along the virtual human body.

5. The apparatus according to claim 3, **characterized in that** said distance calculation unit calculates a rectilinear distance between the place and the stimulus generator.

6. The apparatus according to claim 3, **characterized in that** said distance calculation unit sets a reference surface having, as a perpendicular, a normal to the place on the virtual object, and calculates rectilinear distances between the set reference surface and the positions of the respective stimulus generators.

7. The apparatus according to claim 3, **characterized in that** said distance calculation unit calculates the distances in a direction parallel to a moving direction of the virtual human body.

8. The apparatus according to claim 3, **characterized in that** when the virtual human body partially or entirely breaks into the virtual object, said drive control unit executes the drive control of the stimulus generator which is located inside the virtual object, and does not execute any drive control of the stimulus generators located outside the virtual object.

9. The apparatus according to claim 1, **characterized in that** said drive control unit delays stimulation start timings more by the stimulus generator with increasing distance between the place and the stimulus generator.

10. The apparatus according to claim 1, **characterized in that** said drive control unit weakens stimuli to be generated by the stimulus generator more with increasing distance between the place and the stimulus generator.

11. The apparatus according to claim 1, **characterized in that** said drive control unit controls an increase/decrease pattern of stimuli to be generated by the stimulus generator in accordance with the distance between the place and the stimulus generator.

12. The apparatus according to claim 1, **characterized in that** the stimulus generator comprises one of a stimulus generator which generates a mechanical vibration stimulus, a voice-coil type stimulus generator which generates a mechanical vibration stimulus, a stimulus generator which applies a stimulus by actuating a pin that is in contact with the human body by an actuator, a stimulus generator which presses against a skin surface by a pneumatic pressure, a stimulus generator which applies an electric stimulus to the human body, and a stimulus generator which applies a temperature stimulus to the human body.

13. The apparatus according to claim 1, **characterized by** further comprising a unit adapted to generate an image of the virtual space and present the generated image to the user.

14. An information processing apparatus for controlling a plurality of stimulus generators which are used to apply stimuli to a human body of a user and are laid out on the human body, **characterized by** comprising:
a determination unit adapted to determine whether or not a virtual object which forms a virtual space where the user exists is in contact with the human body; and
a drive control unit adapted to execute, when said determination unit determines that the virtual object is in contact with the human body, drive control for each of a plurality of stimulus generators, which are located near a place, where the virtual object is in contact with the human body, based on a positional relationship between the virtual object and the stimulus generators.

15. The apparatus according to claim 14, **characterized in that** said drive control unit comprises:
a distance calculation unit adapted to calculate distances from a surface of the virtual object to a plurality of stimulus generators located near the place; and
a unit adapted to execute the drive control of the plurality of stimulus generators located near the place based on the calculated distances.

16. An information processing method to be executed by an information processing apparatus for controlling a plurality of stimulus generators which are used to apply stimuli to a human body of a user and are laid out on the human body, **characterized by** comprising the steps of:
determining whether or not a virtual object which forms a virtual space where the user exists is in contact with the human body; and
executing drive control for each of a plurality of stimulus generators, which are located near a place of the contact determined in the determining step, based on a positional relationship between the place and the stimulus generators.

17. An information processing method to be executed by an information processing apparatus for controlling a plurality of stimulus generators which are used to apply stimuli to a human body of a user and are laid out on the human body, **characterized by** comprising the steps of:
determining whether or not a virtual object which forms a virtual space where the user exists is in contact with the human body; and
executing, when it is determined in the determining step that the virtual object is in contact with the human body, drive control for each of a plurality of stimulus generators, which are located near a place, where the virtual object is in contact with the human body, based on a positional relationship between the virtual object and the stimulus generators.

18. A computer-readable storage medium **characterized by** storing a computer program for making a computer execute an information processing method according to claim 16 or 17.
